# EUROPEAN PATENT SPECIFICATION

(11) **EP 3 005 690 B1**
(45) Date of publication and mention of the grant of the patent: **11.12.2019**
(21) Application number: 14728146.3
(22) Date of filing: 28.05.2014
(51) Int. Cl.: H04N 7/14, H04M 3/56, H04N 7/15, H04N 21/422

(54) **METHOD AND SYSTEM FOR ASSOCIATING AN EXTERNAL DEVICE TO A VIDEO CONFERENCE SESSION**
VERFAHREN UND SYSTEM ZUM ZUORDNEN EINER EXTERNEN VORRICHTUNG ZU EINER VIDEOKONFERENZSITZUNG
PROCÉDÉ ET SYSTÈME POUR L'ASSOCIATION D'UN DISPOSITIF EXTERNE À UNE SESSION DE VIDÉOCONFÉRENCE

(30) Priority: 31.05.2013 NO 20130761
(43) Date of publication of application: 13.04.2016
(73) Proprietor: Pexip AS, 1366 Lysaker (NO)
(72) Inventor: GRAFF, Håvard, 0571 Oslo (NO)
(74) Representative: Valea AB
(86) International application number: PCT/EP2014/061003
(87) International publication number: WO 2014/191440

(56) References cited:
- US-A1- 2005 065 976
- US-A1- 2012 245 722

## Description

### Technical field

The present invention relates to a method and a system for associating an external device to a video conference session by means of recognizing acoustic fingerprints.

### Background

Transmission of moving pictures in real-time is employed in several applications like e.g. video conferencing, net meetings and video telephony.

Video conferencing systems allow for simultaneous exchange of audio, video and data information among multiple conferencing sites. Systems known as Multipoint Control Units (MCUs) perform switching functions to allow the endpoints of multiple sites to intercommunicate in a conference. The tasks of an MCU can generally be performed by general Video Conference Management Arrangements (VCMA) like distributed MCUs, conference bridges, routers or conference management servers, to which the term MCU will refer to herein.

The MCU links the sites together by receiving frames of conference signals from the sites, processing the received signals, and retransmitting the processed signals to appropriate sites. The conference signals include audio, video, data and control information. In a switched conference, the video signal from one of the conference sites, typically that of the loudest speaker, is broadcast to each of the participants. In a continuous presence conference, video signals from two or more sites are spatially mixed to form a composite video signal for viewing by conference participants. When the different video streams have been mixed together into one single video stream, the composed video stream is transmitted to the different parties of the video conference, where each transmitted video stream preferably follows a set scheme indicating who will receive what video stream.

In conventional video conferences where a video stream, often referred to as "duo video", is applied and the MCU is involved, the additional video/graphics channel is connected from the transmitter of the duo video to the MCU, which again is retransmitting it to all the other participants. The MCU may continuously distribute the duo video content as it is received from one of the endpoints to the personal devices with authorized access to the conference. The conference application on the personal devices is adjusted to receive and display the content transmitted from the MCU.

In addition to traditional stationary video conferencing endpoints, external devices, such as mobile and computer devices, smartphones, tablets, personal devices and PCs, have recently entered the visual communication marketplace.

A user may be located in front of a screen that is not large enough to show all participants in a video conference. This problem is exacerbated if one of the participants starts sharing a presentation. Sharing the screen between participants' faces and the presentation will render the presentation illegible. Showing only the presentation means that the user can no longer see the presenter.

Thus, there is often a need for connecting computers and other personal devices to a video conference, e.g. for displaying a presentation and sharing documents in a video conference session. The connection is traditionally provided by a cable, e.g. an analog screen cable. Problems related to screen settings, interoperability and connectors may then occur.

It is also cumbersome to find out how to use one of these devices to participate in the videoconferencing session even if the user is already part of the session. The user has to find out the identification of the conference, e.g an URI (Uniform Resource Identifier), which can be hard to track down, and in the case of ad hoc meetings, impossible. Ad hoc meetings may in this context mean Point-to-point calls that are escalated to a multiparty conference hosted on an MCU. In the escalation, the call acquires a new URI that is only addressable to people already participating in the call.

Hence, there is a need for a method of connecting devices to a video conference which requires no or limited user interaction.

### Summary

An objective of embodiments herein is to overcome or at least alleviate the above mentioned disadvantage. This object and other objects are achieved by the independent claims enclosed herewith.

According to an aspect, the objective may be achieved by a method for associating an external device, at least comprising a microphone being in auditory proximity to an endpoint participating in a conference session which is being managed by a conference infrastructure having real time audio of the conference session available. The external device captures, by the microphone, audio emitted from the endpoint, and creates one or more endpoint audio fingerprints from the captured audio. Furthermore, the external device transmits the one or more endpoint audio fingerprints from the external device to the conference infrastructure. The conference infrastructure compares the one or more endpoint audio fingerprints with one or more conference audio fingerprints created correspondingly by the conference infrastructure from real time audio of the conference session, and when a match is identified then associates the external device to the conference session.

The creation of the one or more endpoint audio fingerprints includes creating a pattern of alternating voice activity and silence.

In some embodiments, the creation of the one or more endpoint audio fingerprints includes splitting the audio into smaller samples containing distinct voice activity patterns.

In some embodiments, the external device is a computer, an electronic tablet or a mobile phone.

In some embodiments, the external device is provided with an application, and the method is initiated when the application is started and/or when an associating option in the application is selected.

In some embodiments, the method further comprises: when associating the external device to the conference session, streaming a presentation stream, associated with the conference session, to the external device.

In some embodiments, the method further comprises: when associating the external device to the conference session, connecting the external device as a participant in the conference session.

In some embodiments, the conference session is a video conference session or a teleconference session.

According to another aspect, the objective may be achieved by a system including an external device, being in auditory proximity to an endpoint participating in a conference session, to the conference session which is being managed by a conference infrastructure having real time audio of the conference session available. The system, such as the external device, comprises a microphone connected to the external device adjusted to capture audio emitted from the endpoint by the microphone. Furthermore, the system, such as the external device, comprises creating means, such as a processing circuit, for creating one or more endpoint audio fingerprints from the captured audio. Additionally, the system, such as the external device, comprises transmitting means, such as a transmitter or the like, adjusted to transmit the one or more endpoint audio fingerprints from the external device to the conference infrastructure. Moreover, the system, such as the conference infrastructure, comprises comparing and identification means, such as a processing circuit comprised in the conference infrastructure, adjusted to compare the one or more endpoint audio fingerprints with one or more conference audio fingerprints created correspondingly by the conference infrastructure from real time audio of the conference session, and to identify a match between the one or more endpoint audio fingerprints and the one or more conference audio fingerprints. The system, such as the conference infrastructure, also comprises associating means, such as the processing circuit comprised in the conference infrastructure, adjusted to associate the external device to the conference session when a match is identified by the comparing and identification means.

In some embodiments, the creating means further is adjusted to splitting the audio into smaller samples containing distinct voice activity patterns to create the one or more endpoint audio fingerprints.

According to the invention, said creating means is further adjusted to create a pattern of alternating voice activity and silence to create the one or more endpoint audio fingerprints.

In some embodiments, the external device is a computer, an electronic tablet or a mobile phone.

In some embodiments, the external device is provided with an application, and the system activated when the application is started and/or when an associating option in the application is selected.

In some embodiments, the associating means is further adjusted to stream a presentation stream to the external device when associating the external device to the conference session.

In some embodiments, the associating means is further adjusted to connect the external device as a participant in the conference session.

In some embodiments, the conference session is a video conference session or a teleconference session.

An advantage with the method and system according to embodiments herein is that no or limited user interaction is required in order to associate the external device to the conference session, operated by the conference infrastructure.

According to a further aspect, the objective may be achieved by a method, performed by the external device, for enabling association of the external device, at least comprising a microphone being in auditory proximity to an endpoint participating in a conference session, to the conference session which is being managed by a conference infrastructure having real time audio of the conference session available. The external device captures, by the microphone, audio emitted from the endpoint. Then, the external device creates one or more endpoint audio fingerprints from the captured audio. Subsequently, the external device transmits the one or more endpoint audio fingerprints to the conference infrastructure.

According to yet another aspect, the objective may be achieved by a method, performed by a conference infrastructure for associating an external device, at least comprising a microphone being in auditory proximity to an endpoint participating in a conference session, to the conference session which is being managed by the conference infrastructure having real time audio of the conference session available. The conference infrastructure receives the one or more endpoint audio fingerprints from the external device. The conference infrastructure compares the one or more endpoint audio fingerprints with one or more conference audio fingerprints created correspondingly by the conference infrastructure from real time audio of the conference session. Thereafter, the conference infrastructure associates the external device to the conference session when a match is identified.

### Brief description of the drawings

Figure 1 is a schematic overview of embodiments of the system.
Figure 2 is a schematic flowchart illustrating embodiments of the method performed in the system of Figure 1.
Figure 3 is a schematic block diagram illustrating embodiments of the external device.
Figure 4 is a schematic block diagram illustrating embodiments of the conference infrastructure.

### Detailed description of example embodiments

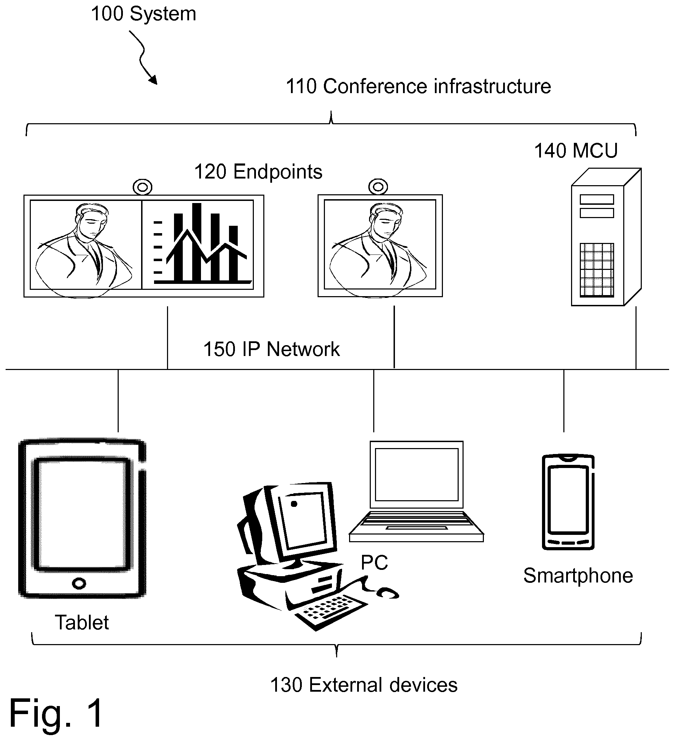

In Figure 1, an exemplifying system 100 in which embodiments herein may be implemented. The system 100 illustrates various units, infrastructures and devices that may be involved in a video conference, or video conference session.

The system 100 comprises a conference infrastructure 110, which may include one or more endpoints 120, such as video endpoints or audio endpoints. A video endpoint may typically be a video conferencing equipment located in for example a conference room. Similarly, an audio endpoint may be a conference phone equipped located in a conference room.

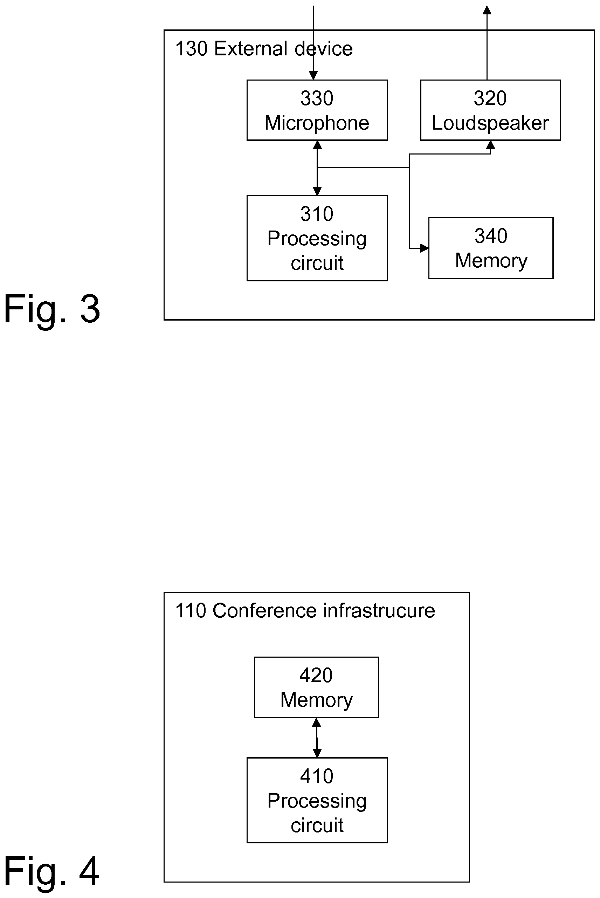

Furthermore, the conference infrastructure 110 may comprise a MCU 140 which manages any conference sessions set up in the conference infrastructure 110. The conference infrastructure will be described in more detail with reference to Figure 4.

Moreover, the system 100 comprises one or more external devices 130.. As used herein, the term "external device" may refer to a mobile phone, a cellular phone, a Personal Digital Assistant (PDA) equipped with radio communication capabilities, a smartphone, a laptop or personal computer (PC) equipped with an internal or external mobile broadband modem, a tablet PC with radio communication capabilities, a portable electronic radio communication device or the like. The external device 130 will be described in more detail with reference to Figure 3.

In Figure 1, an IP network 150 is shown. The IP network 150 is arranged to connect, by wire or wirelessly, the one or more endpoints 120 to the MCU 140 and the external device 130 to the conference infrastructure including the MCU 140.

According to a general embodiment of the present invention, a computer, tablet or smart phone executable application is provided, allowing a user of the application to activate pairing of the device and a video conference session allowing e.g. for streaming of duo video content or other forms of presentations streams of the video conference session from video conference infrastructure like MCUs, conference bridges or servers.

In the following, the term video conferencing session is referred to as the active videoconference with which the user would like to pair his or her device. Further, video conference infrastructure refers to infrastructure devices that are used to host these conferences in order to have a one-to-many conference, including but not limited to MCUs.

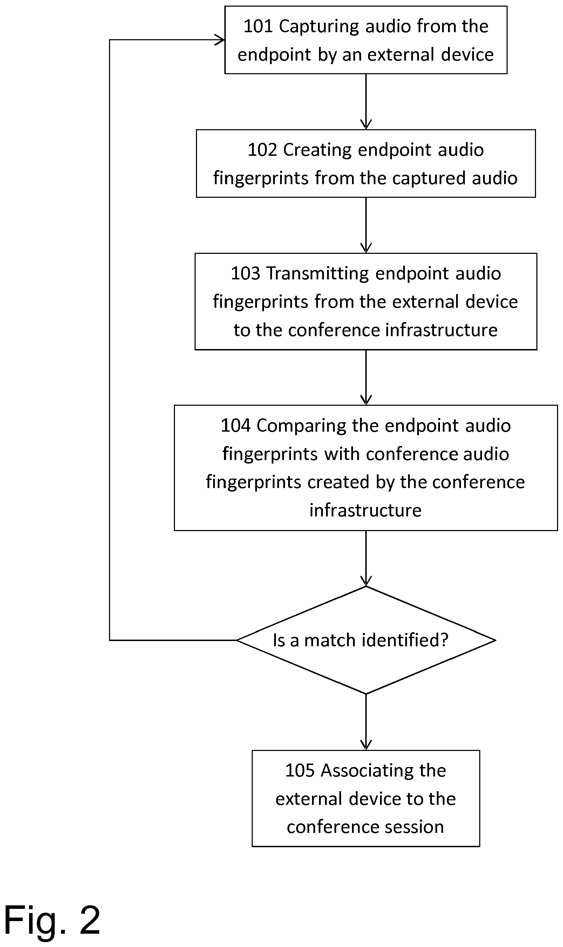

Figure 2 is a flowchart illustrating embodiments disclosed herein. In order to for example provide a wireless method of associating, and connecting, an external device to a video conference, the following actions may be performed in any suitable order.

### Action 101

According to the embodiments herein, it is assumed that a user already taking part in a video conferencing session would like to use an external device to - for example - receive the presentation stream on it, i.e. receiving and/or transmitting presentation stream or other collaboration or media streams incorporated in the video conference session to/from the external device. Hence, the external device captures audio from the endpoint by an external device. As an example, triggered by some event, the external device starts listening on one or more of its microphones in order to fingerprint the audio in proximity.

### Action 102

Consequently, in order to fingerprint the audio, the external device creates one or more endpoint audio fingerprints, such as an acoustic fingerprint, from the captured audio.

### Action 103

Subsequently, the external device transmits, such as by means of a transmitter or the like, the one or more endpoint audio fingerprints to the conference infrastructure. The acoustic, or audio, fingerprint will be provided to the video conference infrastructure which is hosting the particular video conference session, possibly among a number of others. The acoustic fingerprint is a condensed digital summary, deterministically generated from an audio signal that can be used to identify an audio sample or quickly locate similar items in an audio database. In some examples, the condensed digital summary may be transmitted to the conference infrastructure via the IP network 150.

### Action 104

The video conference infrastructure in embodiments herein is continuously, or triggered by some event, fingerprinting the audio of all the conferencing sessions that are hosted on it. It compares the received fingerprint with the fingerprint of the hosted video conferences.

### Action 105

If a matching session is found, the video conference infrastructure associates the external device to the conference session. Expressed differently, the video conference infrastructure may immediately connect the external device to it, or possibly after an authentication.

As already indicated, all conferences do not necessarily have to be continuously fingerprinting the audio. Only when a pairing is initiated, the conferences need to start listening for the fingerprint, since this process of listening might be computational expensive. A simple elimination would also be a very powerful method. A quick filtering of all the conferences that it could not be (based on the received signal), leaving the algorithm to decide between a much smaller data-set. Having the knowledge of that a received fingerprint does have a match in the current set, is very powerful compared to not knowing if the culprit, i.e. the received fingerprint, is in the database. Comparing or elimination techniques can be used very successfully in this case. Indeed, it is much easier to decide that the fingerprint did not come from a specific conference, rather than making an exact match. Doing this iteratively will arrive at the correct match, being able to stop detection for the ones ruled out.

The reason why this works is that the audio, or sound, as recorded by the external device is also being present at the conference infrastructure, even though the sound will not be identical due to the latency appearing between the external device and the video conference infrastructure.

An example user scenario according to one embodiment will follow. A user is present in a large conferencing room having a first video conference endpoint already participating in a video conference session. A presentation included as presentation stream in the video conference session is provided from a second endpoint also participating in the conference. The user would like to study the presentation in more detail than what the display of the first endpoint allows.

He/She therefore activates a video conference application, e.g. a so-called "app", on his personal electronic tablet that he has brought into the meeting room. The application is preconfigured with the address of back-end servers being a part of the video conference infrastructure, and a user association. Once the application is started from the tablet, the user will have the option to associate the device to the video conference session. Having selected this option, it starts capturing audio data from the surroundings by means of a microphone connected to or integrated in the tablet. The captured audio data will then include audio emitted from the first endpoint's loudspeakers, i.e. audio from the video conference session.

The captured audio data is then used as "fingerprints", e.g. as intervals of audio signal patterns which is consecutively transmitted, via the IP network 150, to an MCU or another server (back-end), which is a part of the video conference infrastructure involved in the video conference session.

The back-end receives the fingerprints and finds an ongoing conference that matches the fingerprint. The application is then immediately joined into the conference and is able to receive the ongoing presentation stream, or snapshots of the stream. Alternatively, the conference can have a high-security setting and the application prompts the user for security credentials such as a PIN.

Generally, a robust acoustic fingerprint algorithm must take into account the perceptual characteristics of the audio. If two sounds sound alike to the human ear, their acoustic fingerprints should normally be identified as a match, even if their binary representations may be somewhat different. Acoustic fingerprints are not necessarily bitwise fingerprints, which is sensitive to any small changes in the data. Acoustic fingerprints are more analogous to human fingerprints where small variations that are insignificant to the features the fingerprint uses are tolerated. One can imagine the case of a smeared human fingerprint impression which can accurately be matched to another fingerprint sample in a reference database; acoustic fingerprints work in a similar way.

Perceptual characteristics often exploited by audio fingerprints may include average zero crossing rate, estimated tempo, average spectrum, spectral flatness, prominent tones across a set of bands, and bandwidth.

Most audio compression techniques will make radical changes to the binary encoding of an audio sequence, without radically affecting the way it is perceived by the human ear. A robust acoustic fingerprint will allow an audio sequence to be identified after it has gone through such compression, even if the audio quality has been reduced significantly.

The actual acoustic fingerprinting scheme of audio can be done in several ways, but for the purpose as described herein, the required complexity of the scheme is limited to being able to recognizing the correct video conference session audio, which typically include speech only.

In one embodiment, the sound activity features are utilized. The audio activity is split into smaller samples that contain distinct voice activity patterns. Those patterns are then matched to patterns in the infrastructure's device existing database across all conferencing sessions. The session being the most correlated will be identified as the one to which the external device should be connected.

In another embodiment, a more simplistic scheme is used. Only the pattern of alternating voice activity and silence is used as the acoustic fingerprint, which is being compared with corresponding patterns of the different video conference sessions in the back-plane.

Even if example embodiments herein only refer to video conference sessions, a person skilled in the art would realize that the embodiments also can be utilized in general conferences like e.g. teleconferences between participants only provided with audio features.

The method for associating an external device to a conference session can also be utilized for other purposes than only directing presentation streams to the external device. The external device may also be introduced in the conference session as a whole new endpoint participating in the same way as the other endpoints in the conference session.

As used herein, the term "processing circuit" may be a processing unit, a processor, an application specific integrated circuit (ASIC), a field-programmable gate array (FPGA) or the like. As an example, a processor, an ASIC, an FPGA or the like may comprise one or more processor kernels. In some examples, the processing circuit may be embodied by a software or hardware module. Any such module may be a determining means, estimating means, capturing means, associating means, comparing means, identification means, selecting means, receiving means, transmitting means or the like as disclosed herein.

Figure 3 depicts a schematic, exemplifying external device 130 according to embodiments herein. The external device 130 is configured to enable association of the external device 130 to the conference session which is being managed by the conference infrastructure 110 having real time audio of the conference session available.

The external device 130 comprises a microphone 330. When the methods described herein the microphone 330 may be in auditory proximity to at least one endpoint 120 participating in a conference session.

Moreover, the external device 130 comprises a processing circuit 310 configure to capture, by means of the microphone (330), audio emitted from the endpoint (120).

The processing circuit 310 is further configured to create one or more endpoint audio fingerprints from the captured audio.

Furthermore, the processing circuit 310 is configured to transmit, such as via the IP network 150, the one or more endpoint audio fingerprints to the conference infrastructure 110.

The external device may comprise a memory 340. The memory 340 may be a hard disk, a magnetic storage medium, a portable computer diskette or disc, flash memory, random access memory (RAM) or the like. Furthermore, the memory may be an internal register memory of a processor.

Figure 4 depicts a schematic, exemplifying conference infrastructure 110 according to embodiments herein.

The conference infrastructure 110 is configured to associate the external device 130, at least comprising a microphone being in auditory proximity to at least one endpoint 120 participating in a conference session, to the conference session which is being managed by the conference infrastructure 110 having real time audio of the conference session available.

The conference infrastructure may be connected to, e.g. via the IP network, one or more microphones, which for example may be comprised in one of the endpoints 120.

The conference infrastructure may be connected to, e.g. via the IP network, one or more loudspeakers, which for example may be comprised in one of the endpoints 120.

The conference infrastructure 110 further comprises a processing circuit 410. The processing circuit 410 is configured to receive, such as via the IP network 150, the one or more endpoint audio fingerprints from the external device 130.

Furthermore, the processing circuit 410 is configured to compare the one or more endpoint audio fingerprints with one or more conference audio fingerprints created correspondingly by the conference infrastructure 110 from real time audio of the conference session.

Moreover, the processing circuit 410 is configured to associate the external device 130 to the conference session, when a match is identified.

The conference infrastructure may comprise a memory 420. The memory 420 may be a hard disk, a magnetic storage medium, a portable computer diskette or disc, flash memory, random access memory (RAM) or the like. Furthermore, the memory may be an internal register memory of a processor.

As used herein, the expression "adjusted to" may be that a processing circuit is configured to, or adapted to, by means of software or hardware configuration, perform one or more of the actions described herein.

Generally, the different embodiments described herein are only examples of the invention, and different modifications, implementations and variations obvious for a person skilled in the art are covered by the independent claims as disclosed herein.

## Claims

1. A method for associating an external device (130), at least comprising
a microphone (330) being in auditory proximity to an endpoint (120) participating in a conference session, to the conference session which is being managed by a conference infrastructure (110) having real time audio of the conference session available, the method comprising:
capturing (101), by the microphone (330), audio emitted from the endpoint (120),
creating (102) one or more endpoint audio fingerprints from the captured audio,
transmitting (103) the one or more endpoint audio fingerprints from the external device (130) to the conference infrastructure (110),
comparing (104) the one or more endpoint audio fingerprints with one or more conference audio fingerprints created correspondingly by the conference infrastructure from real time audio of the conference session, and when a match is identified then
associating (105) the external device (130) to the conference session,
**characterized in that** the creation of the one or more endpoint audio fingerprints includes creating a pattern of alternating voice activity and silence.

2. The method according to claim 1, wherein the creation of the one or more endpoint audio fingerprints includes splitting the audio into smaller samples containing distinct voice activity patterns.

3. The method according to one of the claims 1-2, wherein the external device (130) is a computer, an electronic tablet or a mobile phone.

4. The method according to one of the claims 1-3, wherein the external device (1309 is provided with an application, and the method is initiated when the application is started and/or when an associating option in the application is selected.

5. The method according to one of the claims 1-4, wherein the method further comprises: when associating the external device to the conference session, streaming a presentation stream, associated with the conference session, to the external device.

6. The method according to one of the claims 1-4, wherein the method further comprises: when associating the external device to the conference session, connecting the external device (130) as a participant in the conference session.

7. The method according to one of the claims 1-6, wherein the conference session is a video conference session or a teleconference session.

8. A system (100) including an external device (130), being in auditory proximity to an endpoint (120) participating in a conference session, to the conference session which is being managed by a conference infrastructure (110) having real time audio of the conference session available, comprising:
a microphone (330) connected to the external device (130) adjusted to capture audio emitted from the endpoint (120) by the microphone,
creating means (310) for creating one or more endpoint audio fingerprints from the captured audio,
transmitting (320) means adjusted to transmit the one or more endpoint audio fingerprints from the external device (130) to the conference infrastructure (110),
comparing and identification means (410) adjusted to compare the one or more endpoint audio fingerprints with one or more conference audio fingerprints created correspondingly by the conference infrastructure from real time audio of the conference session, and to identify a match between the one or more endpoint audio fingerprints and the one or more conference audio fingerprints, associating means (410) adjusted to associate the external device to the conference session when a match is identified by the comparing and identification means, **characterized in that** said creating means (310) is further adjusted to create a pattern of alternating voice activity and silence to create the one or more endpoint audio fingerprints.

9. The system according to claim 8, wherein the creating means (310) further is adjusted to splitting the audio into smaller samples containing distinct voice activity patterns to create the one or more endpoint audio fingerprints.

10. The system according to one of the claims 8-9, wherein the external device (130) is a computer, an electronic tablet or a mobile phone.

11. The system according to one of the claims 8-10, wherein the external device (130) is provided with an application, and the system is configured to be activated when the application is started and/or when an associating option in the application is selected.

12. The system according to one of the claims 8-11, wherein the associating means is further adjusted to stream a presentation stream to the external device when associating the external device to the conference session.

13. The system according to one of the claims 8-11, wherein the associating means is further adjusted to connect the external device as a participant in the conference session.

14. The system according to one of the claims 8-13, wherein the conference session is a video conference session or a teleconference session.

## Patentansprüche

1. Verfahren zum Zuordnen einer externen Vorrichtung (130), zumindest umfassend
ein Mikrofon (330), das in akustischer Nähe zu einem Endpunkt (120), der an einer Konferenzsitzung teilnimmt, zu der Konferenzsitzung ist, die durch eine Konferenzinfrastruktur (110) geleitet wird, der Echtzeitaudio der Konferenzsitzung zur Verfügung steht, das Verfahren umfassend:
Aufnehmen (101), durch das Mikrofon (330), von Audio, das vom Endpunkt (120) ausgestrahlt wird,
Erstellen (102) eines oder mehrerer Endpunktaudiofingerabdrücke aus dem aufgenommenen Audio,
Senden (103) des einen oder der mehreren Endpunktaudiofingerabdrücke von der externen Vorrichtung (130) zur Konferenzinfrastruktur (110),
Vergleichen (104) des einen oder der mehreren Endpunktaudiofingerabdrücke mit einem oder mehreren Konferenzaudiofingerabdrücken, die durch die Konferenzinfrastruktur entsprechend aus dem Echtzeitaudio der Konferenzsitzung erstellt werden, und wenn eine Übereinstimmung identifiziert wird, dann
Zuordnen (105) der externen Vorrichtung (130) zur Konferenzsitzung,
**dadurch gekennzeichnet, dass**
die Erstellung des einen oder der mehreren Endpunktaudiofingerabdrücke ein Erstellen eines Musters abwechselnder Sprachaktivität und Stille beinhaltet.

2. Verfahren nach Anspruch 1, wobei das Erstellen des einen oder der mehreren Endpunktaudiofingerabdrücke ein Teilen des Audios in kleinere Abtastungen beinhaltet, die getrennte Sprachaktivitätsmuster enthalten.

3. Verfahren nach einem der Ansprüche 1-2, wobei die externe Vorrichtung (130) ein Computer, ein elektronisches Tablet oder ein Mobiltelefon ist.

4. Verfahren nach einem der Ansprüche 1-3, wobei die externe Vorrichtung (1309 mit einer Anwendung bereitgestellt ist und das Verfahren eingeleitet wird, wenn die Anwendung gestartet wird und/oder wenn eine Zuordnungsoption in der Anwendung gewählt wird.

5. Verfahren nach einem der Ansprüche 1-4, wobei das Verfahren weiter umfasst:
wenn die externe Vorrichtung der Konferenzsitzung zugeordnet wird, Streamen eines Präsentationsstreams, der der Konferenzsitzung zugeordnet ist, zur externen Vorrichtung.

6. Verfahren nach einem der Ansprüche 1-4, wobei das Verfahren weiter umfasst:
wenn die externe Vorrichtung der Konferenzsitzung zugeordnet wird, Verbinden der externen Vorrichtung (130) als einen Teilnehmer an der Konferenzsitzung.

7. Verfahren nach einem der Ansprüche 1-6, wobei die Konferenzsitzung eine Videokonferenzsitzung oder eine Telekonferenzsitzung ist.

8. System (100), beinhaltend eine externe Vorrichtung (130), die in akustischer Nähe zu einem Endpunkt (120), der an einer Konferenzsitzung teilnimmt, zu der Konferenzsitzung ist, die durch eine Konferenzinfrastruktur (110) geleitet wird, der Echtzeitaudio der Konferenzsitzung zur Verfügung steht, umfassend:
ein Mikrofon (330), das mit der externen Vorrichtung (130) verbunden ist, das eingestellt ist, um Audio, das von dem Endpunkt (120) ausgestrahlt wird, durch das Mikrofon aufzunehmen,
Erstellungsmittel (310) zum Erstellen eines oder mehrerer Endpunktaudiofingerabdrücke aus dem aufgenommenen Audio,
Sende- (320) Mittel, die eingestellt sind zum Senden des einen oder der mehreren Endpunktaudiofingerabdrücke von der externen Vorrichtung (130) zur Konferenzinfrastruktur (110),
Vergleichs- und Identifizierungsmittel (410), die eingestellt sind zum Vergleichen des einen oder der mehreren Endpunktaudiofingerabdrücke mit einem oder mehreren Konferenzaudiofingerabdrücken, die durch die Konferenzinfrastruktur entsprechend aus Echtzeitaudio der Konferenzsitzung erstellt werden, und zum Identifizieren einer Übereinstimmung zwischen dem einen oder den mehreren Endpunktaudiofingerabdrücken und dem einen oder den mehreren Konferenzaudiofingerabdrücken, Zuordnungsmittel (410), die eingestellt sind zum Zuordnen der externen Vorrichtung zur Konferenzsitzung, wenn eine Übereinstimmung durch die Vergleichs- und Identifizierungsmittel identifiziert wird, **dadurch gekennzeichnet, dass** das Erstellungsmittel (310) weiter eingestellt ist zum Erstellen eines Musters abwechselnder Sprachaktivität und Stille, um den einen oder die mehreren Endpunktaudiofingerabdrücke zu erstellen.

9. System nach Anspruch 8, wobei das Erstellungsmittel (310) weiter eingestellt ist zum Teilen des Audios in kleinere Abtastungen, die getrennte Sprachaktivitätsmuster enthalten, um den einen oder die mehreren Endpunktaudiofingerabdrücke zu erstellen.

10. System nach einem der Ansprüche 8-9, wobei die externe Vorrichtung (130) ein Computer, ein elektronisches Tablet oder ein Mobiltelefon ist.

11. System nach einem der Ansprüche 8-10, wobei die externe Vorrichtung (130) mit einer Anwendung bereitgestellt ist und das System konfiguriert ist, aktiviert zu werden, wenn die Anwendung gestartet wird und/oder wenn eine Zuordnungsoption in der Anwendung gewählt wird.

12. System nach einem der Ansprüche 8-11, wobei das Zuordnungsmittel weiter eingestellt ist, einen Präsentationsstream zur externen Vorrichtung zu streamen, wenn die externe Vorrichtung der Konferenzsitzung zugeordnet wird.

13. System nach einem der Ansprüche 8-11, wobei das Zuordnungsmittel weiter eingestellt ist, die externe Vorrichtung als einen Teilnehmer an der Konferenzsitzung zu verbinden.

14. System nach einem der Ansprüche 8-13, wobei die Konferenzsitzung eine Videokonferenzsitzung oder eine Telekonferenzsitzung ist.

## Revendications

1. Procédé pour associer un dispositif externe (130), comprenant au moins
un microphone (330) se trouvant à proximité d'audition par rapport à un point d'extrémité (120) participant à une session de conférence, à la session de conférence qui est gérée par une infrastructure de conférence (110) présentant un audio en temps réel disponible de la session de conférence, le procédé comprenant les étapes consistant à :
capturer (101), par l'intermédiaire du microphone (330), un audio émis par le point d'extrémité (120),
créer (102) une ou plusieurs empreintes digitales audio de point d'extrémité à partir de l'audio capturé,
transmettre (103) les une ou plusieurs empreintes digitales audio de point d'extrémité à partir du dispositif externe (130) vers l'infrastructure de conférence (110),
comparer (104) les une ou plusieurs empreintes digitales audio de point d'extrémité avec une ou plusieurs empreintes digitales audio de conférence créées de manière correspondante par l'infrastructure de conférence à partir de l'audio en temps réel de la session de conférence, et lorsqu'une correspondance est identifiée,
associer (105) ensuite le dispositif externe (130) à la session de conférence,
**caractérisé en ce que** la création des une ou plusieurs empreintes digitales audio de point d'extrémité inclut la création d'un motif d'activité vocale et de silence en alternance.

2. Procédé selon la revendication 1, dans lequel la création des une ou plusieurs empreintes digitales audio de point d'extrémité inclut la division de l'audio en échantillons plus petits contenant des motifs d'activité vocale distincts.

3. Procédé selon l'une des revendications 1 et 2, dans lequel le dispositif externe (130) est un ordinateur, une tablette électronique ou un téléphone portable.

4. Procédé selon l'une des revendications 1 à 3, dans lequel le dispositif externe (1309 est muni d'une application, et le procédé est lancé lorsque l'application est démarrée et/ou lorsqu'une option d'association dans l'application est sélectionnée.

5. Procédé selon l'une des revendications 1 à 4, dans lequel le procédé comprend en outre : lors de l'association du dispositif externe à la session de conférence, une diffusion en continu d'un flux de présentation, associé à la session de conférence, au dispositif externe.

6. Procédé selon l'une des revendications 1 à 4, dans lequel le procédé comprend en outre : lors de l'association du dispositif externe à la session de conférence, une connexion du dispositif externe (130) en tant que participant à la session de conférence.

7. Procédé selon l'une des revendications 1 à 6, dans lequel la session de conférence est une session de vidéoconférence ou une session de téléconférence.

8. Système (100) incluant un dispositif externe (130), se trouvant à proximité d'audition par rapport à un point d'extrémité (120) participant à une session de conférence, à la session de conférence qui est gérée par une infrastructure de conférence (110) présentant un audio en temps réel disponible de la session de conférence, comprenant :
un microphone (330) connecté au dispositif externe (130) ajusté pour capturer un audio émis depuis le point d'extrémité (120) par le microphone,
des moyens de création (310) pour créer une ou plusieurs empreintes digitales audio de point d'extrémité à partir de l'audio capturé,
des moyens (320) de transmission ajustés pour transmettre les une ou plusieurs empreintes digitales audio de point d'extrémité du dispositif externe (130) à l'infrastructure de conférence (110),
des moyens de comparaison et d'identification (410) ajustés pour comparer les une ou plusieurs empreintes digitales audio de point d'extrémité avec une ou plusieurs empreintes digitales d'audio de conférence créées de manière correspondante par l'infrastructure de conférence à partir d'un audio en temps réel de la session de conférence, et pour identifier une correspondance entre les une ou plusieurs empreintes digitales audio de point d'extrémité et les une ou plusieurs empreintes de conférence, des moyen d'association (410) ajustés pour associer le dispositif externe à la session de conférence lorsqu'une correspondance est identifiée par les moyens de comparaison et d'identification, **caractérisé en ce que** lesdits moyens de création (310) sont en outre ajustés pour créer un motif d'activité vocale et silence en alternance afin de créer une ou plusieurs empreintes digitales audio de point d'extrémité.

9. Système selon la revendication 8, dans lequel les moyens de création (310) sont en outre ajustés pour diviser l'audio en échantillons plus petits contenant des motifs d'activité vocale distincts pour créer les une ou plusieurs empreintes digitales audio de point d'extrémité.

10. Système selon l'une des revendications 8 à 9, dans lequel le dispositif externe (130) est un ordinateur, une tablette électronique ou un téléphone portable.

11. Système selon l'une des revendications 8 à 10, dans lequel le dispositif externe (130) est pourvu d'une application, et le système est configuré pour être activé lorsque l'application est démarrée et/ou lorsqu'une option d'association dans l'application est sélectionnée.

12. Système selon l'une des revendications 8 à 11, dans lequel les moyens d'association sont en outre ajustés pour diffuser en continu un flux de présentation au dispositif externe lors de l'association du dispositif externe à la session de conférence.

13. Système selon l'une des revendications 8 à 11, dans lequel les moyens d'association sont en outre ajustés pour connecter le dispositif externe en tant que participant à la session de conférence.

14. Système selon l'une des revendications 8 à 13, dans lequel la session de conférence est une session de vidéoconférence ou une session de téléconférence.
